(19) **Europäisches Patentamt / European Patent Office / Office européen des brevets**

(11) **EP 3 340 355 B1**

(12) **EUROPEAN PATENT SPECIFICATION**

(45) Date of publication and mention of the grant of the patent:
**05.02.2020 Bulletin 2020/06**

(51) Int Cl.:
*H01M 8/04858* (2016.01)   *H01M 8/249* (2016.01)
*H01M 16/00* (2006.01)   *H01M 8/2465* (2016.01)
*H01M 8/0202* (2016.01)   *H01M 8/04537* (2016.01)

(21) Application number: **16382626.6**

(22) Date of filing: **20.12.2016**

(54) **HYBRID POWER SYSTEM AND CONTROL METHOD THEREOF**

HYBRIDES LEISTUNGSSYSTEM UND STEUERVERFAHREN DAFÜR

SYSTÈME D'ALIMENTATION HYBRIDE ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2018 Bulletin 2018/26**

(73) Proprietor: **The Boeing Company**
**Chicago, IL 60606-2016 (US)**

(72) Inventors:
• **FERREYRA, Eduardo Gabriel**
  **28042 MADRID (ES)**
• **SERROT HAUKE, Enrique Emilio**
  **28042 MADRID (ES)**
• **LEMUS, José Luis**
  **28042 MADRID (ES)**
• **BLANCO, José Antonio**
  **28042 MADRID (ES)**
• **LAPEÑA-REY, Nieves**
  **28042 MADRID (ES)**

(74) Representative: **Carvajal y Urquijo, Isabel et al**
**Clarke, Modet & Co.**
**Suero de Quiñones, 34-36**
**28002 Madrid (ES)**

(56) References cited:
**US-A1- 2005 142 407   US-A1- 2006 204 815**
**US-A1- 2009 181 269   US-A1- 2011 200 906**
**US-B1- 6 555 928**

## Description

## FIELD

The present disclosure is comprised in the field of fuel cells and hybrid power systems.

## BACKGROUND

Fuel cell systems are used in vehicles on account of their high energy density (Wh/cm$^3$) and specific energy (Wh/kg). However, due to their limited specific power (W/kg), the fuel cell systems are frequently combined in a hybrid configuration with an energy source with high power discharge. The most common configuration of a hybrid power system consists on a combination of batteries and a fuel cell stack. This type of hybrid power system requires relatively complex power electronic circuits and a prior matching of the voltages of the batteries and the fuel cell stack.

The matching of the two power sources is essentially a tradeoff, due to the different nature of a battery compared to a fuel cell in terms of dynamic behavior. As a result, it is impossible to take full advantage of both power sources. All hybridizations consist of a compromise in which some benefits of each power source are sacrificed:

- Batteries can produce higher currents at practically every voltage; on the contrary, when a fuel cell is delivering the maximum current the voltage decreases by almost half.

- The voltage of a battery decreases depending on the remaining capacity; however, the voltage of a fuel cell depends on several factors.

- The output impedance of a battery is orders of magnitude lower than the output impedance of a fuel cell; thus, the battery behaves more similarly to an ideal voltage source.

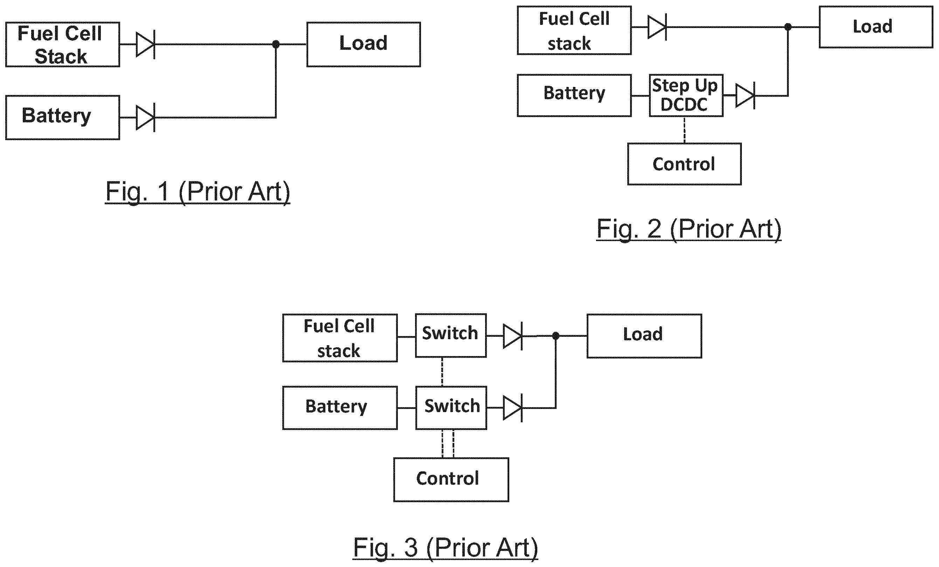

Currently, different types of connection schemes are used to hybridize fuel cells and batteries, as shown in Figures 1 to 3. Figure 1 depicts the connection of a fuel cell stack and a battery with a simple load sharing device. In this connection scheme the hybridization occurs at the voltage the battery sits in, causing the fuel cells to work at low efficient ranges. This kind of hybrid power system presents several drawbacks:

- The voltage of the hybridization depends not only on the current state of charge of the battery, but it also changes dynamically depending on the load power demand (at high current discharges, the voltage of the battery falls rapidly and then recovers when no power is demanded).

- The voltage range of a lithium based battery spans roughly from 3 to 4 volts per cell, and the dependency between the voltage and the current delivered is relatively low. The fuel cell behaves differently, since as the current grows the voltage drops for a static discharge. Therefore, matching these two completely different energy sources ends up stressing one of them.

Another connection scheme is depicted in Figure 2. This type of connection employs a DC/DC step-up converter placed between the battery and the load sharing device. The voltages at the load sharing device are then matched by an external controller changing the setting of the step-up converter output voltage. There are significant drawbacks to this solution:

- The efficiency of variable step-up converters depends on the output voltage settings, and are usually below 90%.

- The step-up converters used in power applications dissipate a lot of heat and need large heatsinks and often forced ventilation. Forced ventilation usually means extra weight, extra space and extra power consumption.

Figure 3 illustrates another connection scheme using electronic switching between batteries and fuel cells. This solution, although more efficient, has a main disadvantage: the battery and the fuel cell have practically no range in which both are delivering power to the load at the same time, making it useful only as a backup power source system. This topology presents other disadvantages:

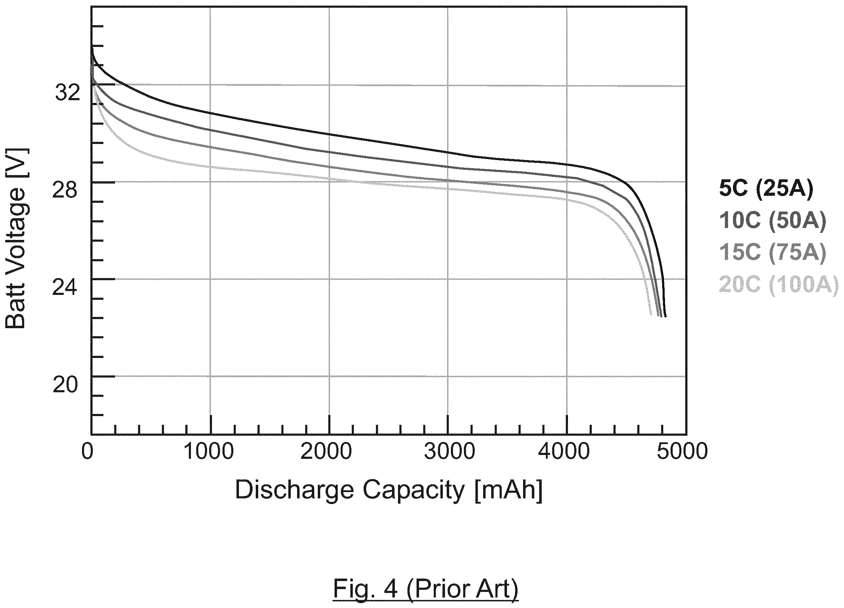

- While the battery is delivering power, the fuel cell is idle. This way, the battery delivers more current, increasing the discharge rate C and thus shortening its capacity at a higher rate, as shown in Figure 4. This figure depicts an example of a discharge curve for a 5000mAh battery cell, depending on the particular discharge rate C used (5C, 10C, 15C, 20C). The capacity finally depends on the discharge rate C; for instance, if the battery discharges at a 5C rate (25 A), the final capacity obtained is around 4820 Wh, whereas for a higher discharge rate of 20C (100 A), the capacity obtained for the same battery is around 4750 Wh.

- As the fuel cell sits in idle, its temperature will decrease. This way, it needs to have a low power mode implemented to remain within temperature limits; otherwise, when the fuel cell should be kicking in, there will be a delay caused by the fuel cell increasing its internal temperature up to its nominal point to be able to provide the requested power.

Patent document US6555928-B1 discloses a hybrid power source and a power source control method for hybrid-driven vehicles, the hybrid power source comprising a fuel cell and a battery. However, in this disclosure the fuel cell is not prepared to work efficiently for the whole battery range.

Patent document US2009181269-A1 discloses a fuel cell which can work efficiently for low power operation, using a plurality of sub-stacks which are fed independently with separate channels for hydrogen inflow. As a consequence, this fuel cell requires a great amount of costly modifications in the fuel cell, including many supply inlets (six, in particular) in one of the end plates, along with valves to operate each hydrogen channel and detectors to monitor the temperature of the gas in each channel.

Therefore, there is a need for a fuel cell stack to be used in combination with batteries to achieve optimized hybrid power systems.

## SUMMARY

Fuel cells are normally presented in serialized single cells forming stacks, having a conductive plate at each end (i.e. end plates), and providing a voltage which is the sum of all the voltages of the single cells. The present disclosure refers to a hybrid power system to feed a load, wherein the hybrid power system comprises a battery, a control unit and a fuel cell stack with one or more middle conductive plates to tap the fuel cell stack at an intermediate voltage, making it advantageous for both the physical condition of the fuel cell stack itself and the application with batteries in hybrid power systems. In particular, when applied to hybrid power systems, the fuel cell stack allows producing more power, and at the same time there is less damage (and consequently longer life) for the fuel cell. The term "conductive" used in the present disclosure (e.g. "conductive end plate", "conductive middle plate") refers to "electrically conductive".

The fuel cell stack used in the hybrid power system comprises first and second conductive end plates with contact terminals, a plurality of fuel cells electrically connected in series and stacked between the conductive end plates, and at least one conductive middle plate with at least one contact terminal. Each conductive middle plate is stacked between adjacent fuel cells. The fuel cell stack may also comprise an end plate placed at each end of the fuel cell stack.

The control unit is configured to select an operating voltage of the fuel cell stack obtained from the contact terminals of the at least one conductive middle plate and conductive end plates when the hybrid power system is feeding the load. The control unit is configured to select the operating voltage of the fuel cell stack depending on the values of the voltages at the contact terminals of the fuel cell stack. The voltage of the battery may also be considered when selecting the operating voltage.

The control unit is further configured to compare the selected operating voltage of the fuel cell stack feeding the load with a safe lower limit, and if the current operating voltage is inferior to the safe lower limit, select a lower operating voltage, obtained from the contact terminals of the at least one conductive middle plate and conductive end plates, to feed the load.

In an embodiment, the fuel cell stack may comprise a plurality of fuel cell sub-stacks connected in series, each fuel cell sub-stack comprising at least one fuel cell. Each conductive middle plate is configured to be stacked between a pair of adjacent fuel cell sub-stacks. According to an embodiment, a fuel cell sub-stack may comprise a plurality of bipolar plates and at least one fuel cell, wherein each fuel cell is stacked between a pair of bipolar plates.

According to another embodiment, the fuel cell stack comprises a plurality of bipolar plates, each bipolar plate being arranged between adjacent fuel cells. Each conductive middle plate is configured to be stacked in contact with a bipolar plate and the cathode or anode of a fuel cell.

In yet a further embodiment, the fuel cell stack comprises a plurality of bipolar plates, each bipolar plate being arranged between adjacent fuel cells, and each conductive middle plate being configured to be stacked in contact with the cathode of a fuel cell and the anode of an adjacent fuel cell. In this embodiment the conductive middle plate has a double function: acting as a bipolar plate and at the same time providing contact terminals to allow accessing different voltage levels.

Each contact terminal may comprise one or more conductive tabs protruding from the fuel cell stack. In an embodiment, the conductive middle plate may comprise a bipolar plate and one or more conductive tabs protruding from the bipolar plate.

The hybrid power system may further comprise a plurality of switches connecting the load with the contact terminals of the conductive middle plate and at least one contact terminal of the conductive end plates of the fuel cell stack, wherein the control unit is configured to operate the switches to select the operating voltage of the fuel cell stack used to feed the load.

The hybrid power system may also comprise a battery switch connecting the load with the battery, wherein the control unit is configured to operate the battery switch depending on the values of the voltage of the battery and the operating voltage of the fuel cell stack.

In an embodiment, one of the conductive end plates may be connected to ground and the operating voltage may be defined as the electric tension between a contact terminal of a conductive middle plate (or the contact terminal of the other conductive end plate, not connected to ground) and ground. Alternatively, the operating voltage may be defined as the electric tension between two different contact terminals of the fuel cell stack (in that case, there are multiple different possible combinations).

A further aspect of the present invention also refers to a method to control a hybrid power system comprising a battery and a fuel cell stack according to the present disclosure. The method comprises selecting an operating voltage of the fuel cell stack obtained from contact terminals of the conductive end plates and at least one conductive middle plate stacked between adjacent fuel cells when the hybrid power system (90) is feeding a load.

The operating voltage of the fuel cell stack is selected depending on the values of the voltages at the contact terminals of the fuel cell stack. The voltage of the battery may also be considered.

The method further comprises determining if the selected operating voltage of the fuel cell stack feeding the load is lower than a safe lower limit, and in that case selecting a lower operating voltage, obtained from the contact terminals of the at least one conductive middle plate and conductive end plates, to feed the load. In an embodiment, the safe lower limit is a value proportional to the number of active fuel cells feeding the load.

The method may also comprise determining if the voltage of the entire fuel cell stack is lower than the voltage of the battery, and in that case activating a battery switch to feed the load with energy provided by the battery.

In an embodiment, the fuel cell stack is made up of a plurality of fuel cell sub-stacks connected in series, and a conductive middle plate placed between each pair of fuel cell sub-stacks and in electrical contact with each sub-stack. The fuel cell stack provides power by accessing contact terminals of the end plates and/or the middle plates.

A hybrid power system is made up one or more batteries and a fuel cell stack. As the batteries weaken due to a heavy electrical load, the hybrid power system switches access to a conductive middle plate of the fuel cell stack. Switching to a middle plate voltage will result in an intermediate voltage. The system is now able to provide more power without causing damage to the fuel cell.

Moreover, using a middle-plate configuration permits merging fuel cell power when the battery voltage is low. It also ensures that the fuel cell is able to deliver its nominal power without penalizing the battery due to overheating. In case the battery starts depleting (for example, because the power demand needs more than what the fuel cell stack can deliver by itself) access to the fuel cell stack can be switched to the middle plate, so it would continue to deliver power without incurring damages, resulting in longer operating life for the fuel cell.

The fuel cell stack using this particular configuration is also a simple and cost-effective solution. The cost of placing middles plate in a fuel cell stack is practically negligible compared to the price of the fuel cell stack itself. Besides, the switching logic that selects which plate to use is simpler, smaller, cheaper, more efficient than a DC/DC step-up converter. Additional elements that a step-up converter would require, such as heatsinks and fans, can also be spared. The fuel cell stack used in the hybrid power system of the present disclosure is easier to debug; in this sense, the maintenance costs would also be reduced due of its simplicity and because the lifespan of the fuel cells would be extended. Allowing the fuel cell to work in its maximum efficiency range avoids or reduces the space needed for conditioning purposes (heatsinks, fans, mounting brackets, etc.) which could reduce the payload bay.

The hybrid power system may be installed and applied to any device or vehicle using fuel cells: fuel cell powered airborne vehicles, fuel cell powered cars, fuel cell powered boats or even fuel cell powered stationary equipment.

The features, functions, and advantages that have been discussed can be achieved independently in various embodiments or may be combined in yet other embodiments further details of which can be seen with reference to the following description and drawings.

## BRIEF DESCRIPTION OF THE DRAWINGS

A series of drawings which aid in better understanding the invention and which are expressly related with an embodiment of said invention, presented as a non-limiting example thereof, are very briefly described below.

Figures 1, 2 and 3 depicts different connection schemes in hybrid power systems according to the prior art. Figure 1 shows a common direct hybridization method, Figure 2 a hybridization using a DC/DC step-up converter, and Figure 3 a hybridization using electronic switching.

Figure 4 depicts a 5000mAh 25C battery cell discharge curve for different discharge rates.

Figure 5 displays the structure of a fuel cell stack with a middle plate according to an embodiment of the present disclosure.

Figure 6 shows a schematic representation of the layers forming a fuel cell sub-stack.

Figure 7 depicts a schematic layout of the layers of the fuel cell stack of Figure 5.

Figure 8 represents another embodiment of a fuel cell stack with multiple conductive middle plates.

Figure 9A shows a 45-cell fuel cell stack matching for a pack of eight 8 LiPo batteries. Figure 9B represents the voltage ranges of an 8-cell battery and the voltage range of a 50-cell fuel cell provided with two different middle plates placed at a position corresponding to 45-cell and 40-cell, respectively.

Figure 10 depicts the cell discharge curves of Figure 4 for a 5000mAh battery cell, and the nominal voltages of three different fuel cell stack configurations using middle plates.

Figure 11 represents an embodiment of a hybrid power system, formed by a battery and a fuel cell stack with a two-middle plate configuration, and the control system managing the hybridization.

Figure 12 illustrates a basic flow diagram of an exemplary switching process control carried out by the control system of Figure 11.

Figure 13 depicts, according to another embodiment, the structure of a fuel cell stack with several conductive middle plates.

Figure 14 represents yet another embodiment of the fuel cell stack with several conductive middle plates.

## DETAILED DESCRIPTION

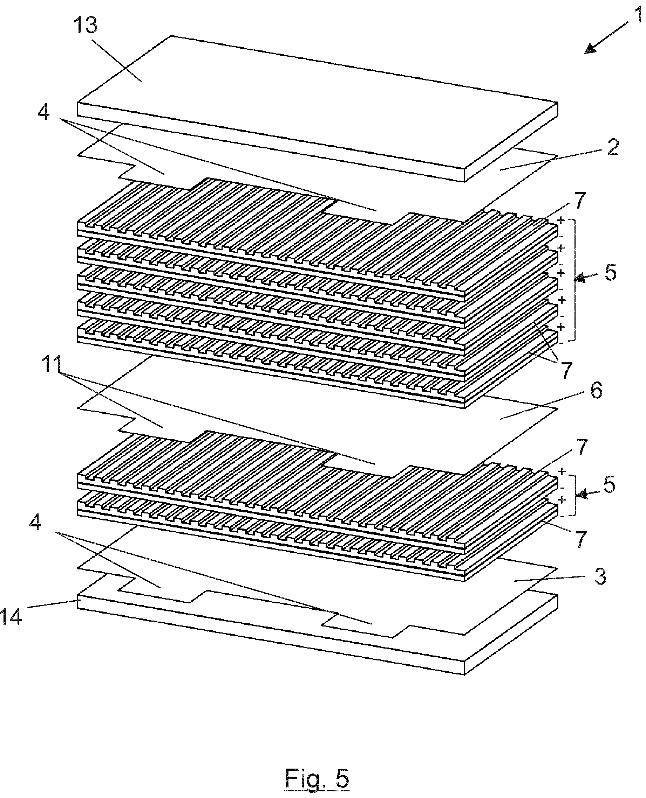

The present disclosure refers to a hybrid power system comprising a fuel cell stack used in combination with batteries. **Figure 5** illustrates an embodiment of a fuel cell stack 1 according to the present disclosure.

The fuel cell stack 1 comprises a first conductive end plate 2, acting as cathode, and a second conductive end plate 3, acting as anode, placed at both ends of the stack. Each end plate (2, 3) is provided with at least one contact terminal. The contact terminal may be, for instance, a metallic part attached to the end plate, an integral part of the end plate itself or an extension of the end plate or, as in the embodiment shown in Figure 5, implemented as one or more conductive tabs 4 or solder lugs extending from each conductive end plate. The voltage between contact terminals of first end plate 2 and second end plate 3 is the maximum voltage generated by the fuel cell stack 1.

The fuel cell stack 1 also comprises a plurality of fuel cells 7 arranged in two or more fuel cell sub-stacks 5 placed between the end plates (2, 3). Within each of the sub-stacks 5 the fuel cells are electrically connected in series with one another. The fuel cell sub-stacks 5 are in turn connected in series, oriented in the same direction and maintaining the same polarity. Each fuel cell sub-stack 5 comprises at least one fuel cell 7. In the embodiment of Figure 5, the fuel cell stack 1 comprises two sub-stacks 5 made up of five individual fuel cells 7 and two single fuel cells 7, respectively.

At least one conductive middle plate 6 is stacked between a pair of fuel cell sub-stacks 5. In the embodiment of Figure 5, a middle plate 6 is located between the two adjacent sub-stacks 5. Each middle plate 6 is also provided with at least one contact terminal (in the embodiment of Figure 5 implemented as one or more conductive tabs 11, flaps or solder lugs extending from each conductive middle plate 6, protruding from the fuel cell stack 1) through which an intermediate voltage, lower than the maximum voltage of the fuel cell stack 1, can be obtained.

The fuel cell stack 1 may further comprise an end plate (13, 14) located at each end of the stack. The end plates (13, 14) are normally made of glass fiber, although they can be manufactured using other materials, such as plastics or even metallic materials. These end plates (13, 14) are used to compact the stack, usually using a threaded rod or very long screws from one end plate to the other, which can be tighten to improve the contact between adjacent fuel cells so that all the ducts (hydrogen and oxygen) are perfectly sealed.

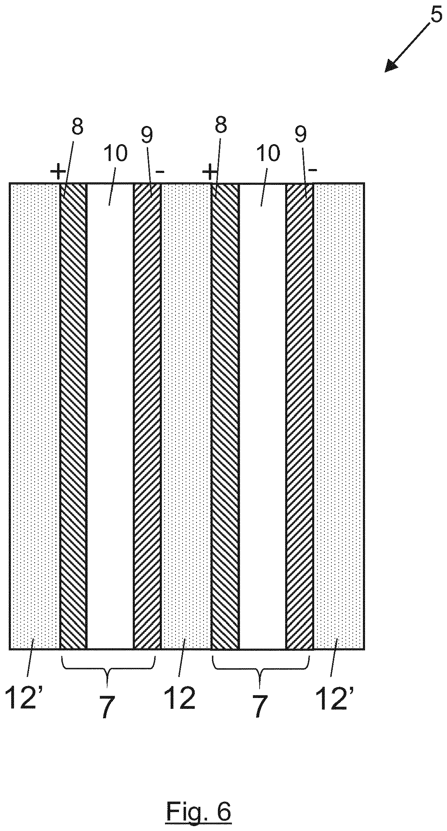

In an embodiment, a fuel cell sub-stack 5 comprises one or more fuel cells 7 separated by bipolar plates (not shown in Figure 5). **Figure 6** depicts, in a schematic side view, the different layers forming a fuel cell sub-stack 5. In this embodiment, the fuel cell sub-stack 5 comprises two fuel cells 7. Each fuel cell 7 is represented with a block diagram, formed by a cathode 8, an anode 9 and a layer of an electrolyte 10. In an embodiment, each fuel cell 7 is stacked between a pair of bipolar plates (12, 12'). In each sub-stack 5, the inner bipolar plates 12 which are located between two adjacent fuel cells 7 form the positive side of one fuel cell 7 and the negative side of an adjacent fuel cell 7, as observed in the central bipolar plate 12 of Figure 6. The use of bipolar plates permits all of the fuel cells 7 in a sub-stack 5 to be electrically interconnected in series with one another. The fuel cell sub-stack 5 may also comprise outer bipolar plates 12' located at both ends. In another embodiment, one or both of these outer bipolar plates 12' may be absent.

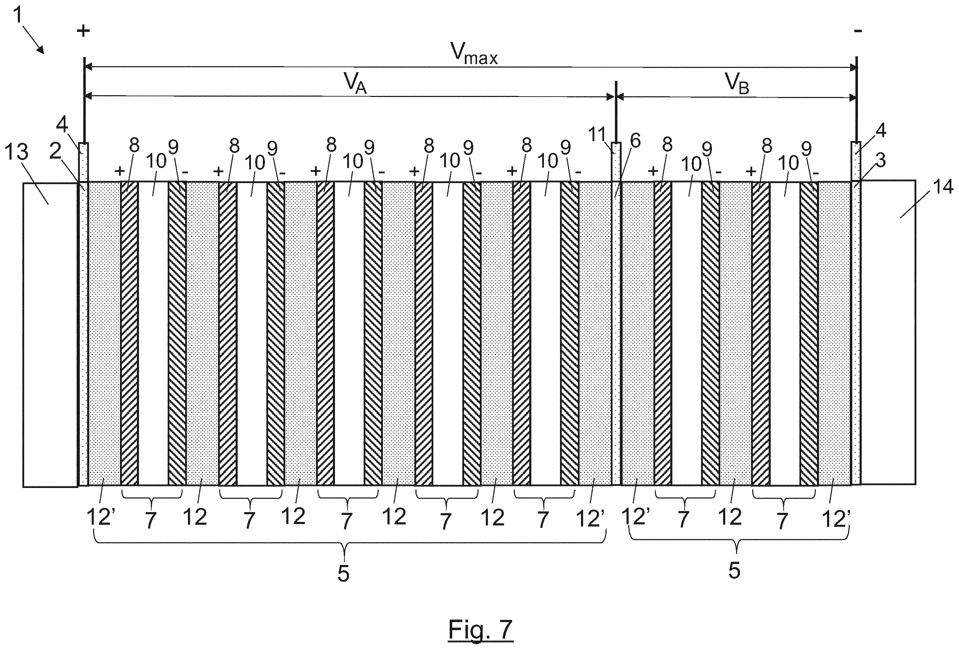

**Figure 7** represents a schematic layout of the fuel cell stack 1 of Figure 5. All the fuel cells 7 within a sub-stack 5 are connected in series. Both sub-stacks are also connected in series, with the same orientation, through respective outer bipolar plates 12' which electrically connect the anode 9 of an outer fuel cell 7 of a sub-stack 5 with the cathode 8 of an outer fuel cell 7 of the other sub-stack 5. A conductive middle plate 6 is stacked in between both outer bipolar plates 12'. By accessing the contact terminal 11 of the middle plate 6, intermediate voltages (lower than the maximum voltage $V_{max}$ between conductive end plates 2 and 3) can be obtained. In particular, a voltage $V_A = \dfrac{5}{7} V_{\max}$ between contact terminals (4, 11) of first end plate 2 and middle plate 6, and a voltage $V_B = \dfrac{2}{7} V_{\max}$ between contact terminals (11, 4) of middle plate 6 and second end plate 3, can be obtained.

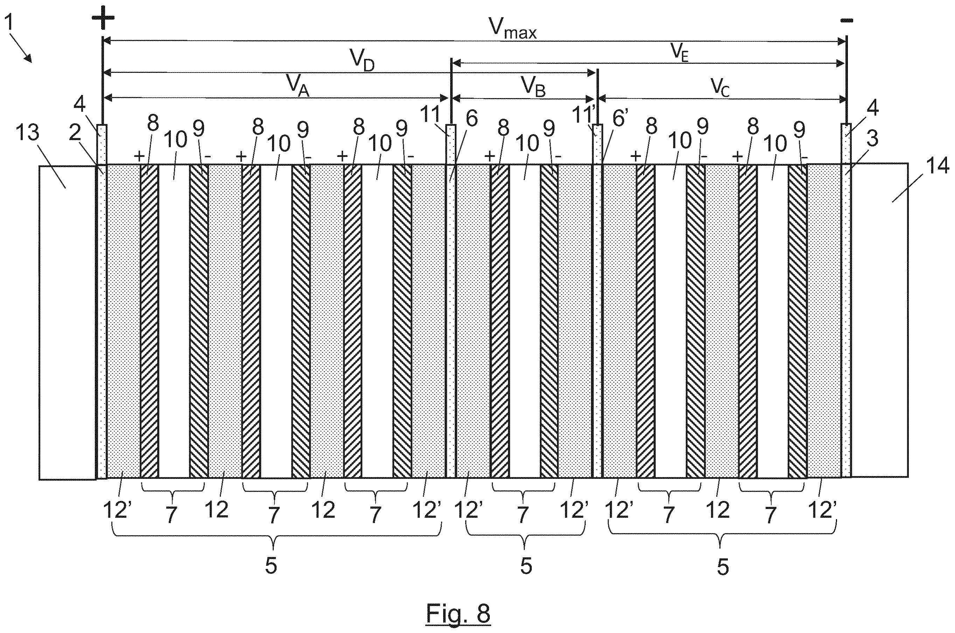

In another embodiment of the fuel cell stack 1, a plurality of middle plates 6 can be stacked to gain access to additional intermediate voltages. **Figure 8** depicts a fuel cell stack 1 with three sub-stacks 5 (with three, one and two fuel cells, respectively) and two middle plates (a first middle plate 6 and a second middle plate 6') separating adjacent sub-stacks 5. Different intermediate voltages $V_A = \frac{1}{2}V_{max}$ , $V_B = \frac{1}{6}V_{max}$ , $V_C = \frac{1}{3}V_{max}$ , $V_D = \frac{2}{3}V_{max}$ , $V_E = \frac{1}{2}V_{max}$ can be accessed through the contact terminals (4, 11, 11').

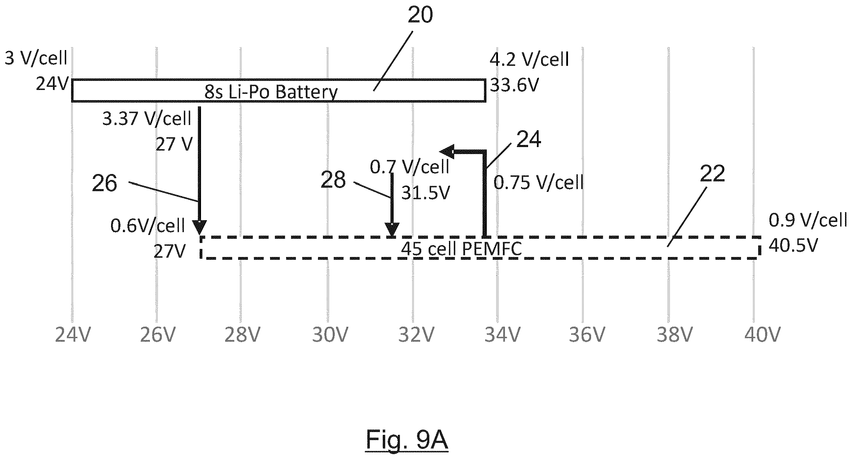

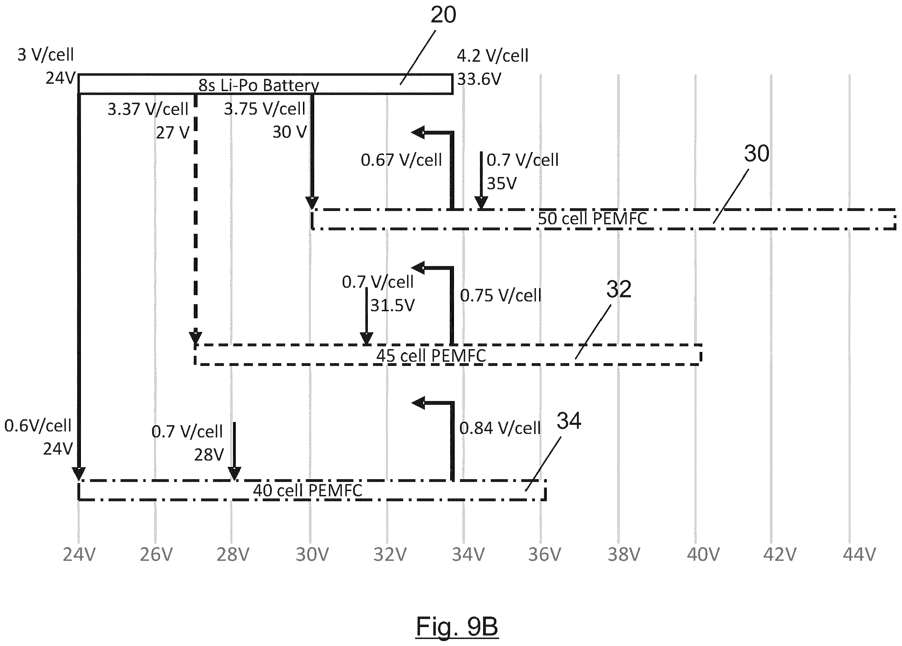

By using middle plates (6, 6') with contact terminals (11, 11'), the fuel cells of the stack 1 can also be dimensioned to work in its most efficient range, achieving longer endurance for a given amount of fuel. In the examples of **Figures 9A** and **9B,** showing the matching of different fuel cell stacks with a pack of eight 8 LiPo batteries, the most efficient voltage (taking into account not only electric efficiency but fuel utilization efficiency) is 0.7 V/cell and for that range, while using the full 50-cell stack, the battery is not depleting itself because the overall voltage (35V) is still out of the sharing region.

Figure 9A shows the working voltage range of an 8-cell battery and a 45-cell fuel cell stack, and how the power would be shared in a hybrid system with a fuel cell without middle plate. The bar 20 shows the range of the battery which, when fully charged, has a voltage of 4.2 V/cell (i.e. a total voltage of 33.6 V, right side of the bar 20). As the battery is being depleted, the voltage provided per cell is reduced, down to 3 V/cell (i.e. a total voltage of 24 V, left side of the bar 20). The bar 22 corresponds to the voltage range of the fuel cell. In open circuit, without a load, the voltage at the terminals is around 0.9 V/cell (adding up to 40.5 V). As the load increases, the voltage drops to a lower limit (before risking damage) of 0.6 V/cell (i.e. 27 V). The broken arrow 24 indicates the voltage of the fuel cell stack (0.75 V/cell) from which the fully charged battery (33.6 V) would begin to complement the fuel cell stack through a hybrid system (when both voltages are equalized). The arrow 26 indicates the point at which the fuel cell would be at its lower voltage limit (0.6 V/cell) before risking damage. At that point, the battery can no longer be discharged, because it would force the fuel cell to fall below its lower voltage limit. At that point it would be convenient to switch to a middle plate of the fuel cell stack to continue discharging the battery. The arrow 28 simply indicates an intermediate voltage in which the fuel cell stack is working normally (switching to a middle plate is not required at this point).

Figure 9B shows the voltage ranges of an 8-cell lithium battery and the voltage range of a 50-cell fuel cell (bar 30) with two different middle plates placed at a position of 45-cell (bar 32) and 40-cell (bar 34), respectively. When the first middle plate is selected in the fuel cell stack, it works as a 45-cell fuel cell stack, whereas if the second middle plate is selected, the fuel cell stack works as a 40-cell fuel cell stack. Figure 9B shows how as progressively switching to the middle plate corresponding to the 45-cell first and to the middle plate corresponding to the 40-cell later, the fuel cell stack can correctly and progressively adapt to the current voltage of the battery.

The fuel cell stack 1 of the present disclosure also allows, when applied to a hybrid power system, a perfect matching for batteries that simplifies electronics. Figure 9B shows how using a single middle-plate configuration placed on a 40-cell stack would let merging fuel cell power when the battery is below 30V. It also would ensure that the fuel cell is able to deliver its nominal power without penalizing the battery when it is configured for 50 cells. In case the battery starts depleting (for example, because the power demand needs more than what the fuel cell can deliver by itself) when the battery reaches the 30V limit, the fuel cell can be switched to its middle plate, so it would continue to deliver power without incurring damages.

The fuel cell stack 1 also allows sharing hybrid power with the battery for the whole battery range. In case a prolonged sharing is required, the battery can fully deplete while still having a contribution from the fuel cell.

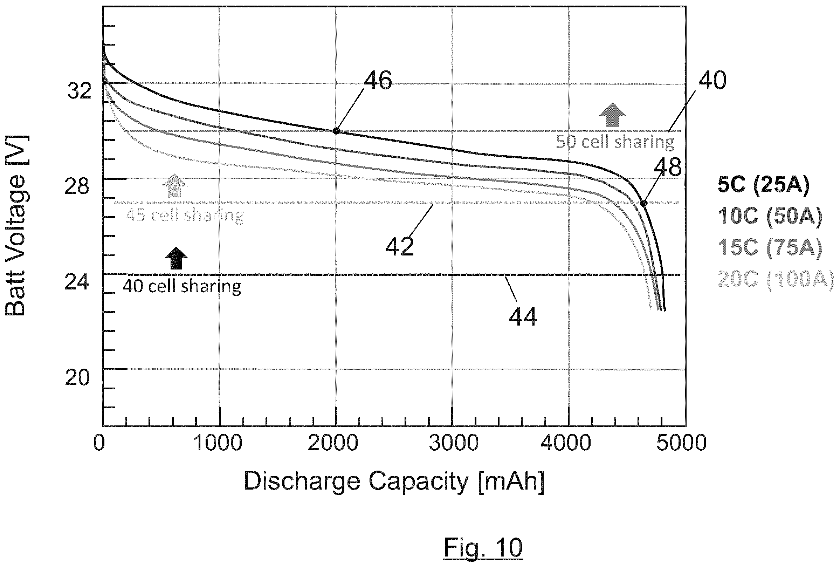

**Figure 10** depicts the cell discharge curve of Figure 4 for different discharge rates C of a 5000mAh battery cell. This figure also includes three dotted lines (40, 42, 44) which indicate the voltage of three different fuel cell stacks (40-cell, 45-cell and 50-cell fuel stacks) when subjected to their nominal load at 0.6 V/cell. Below this voltage, the fuel cell stack is being stressed. The arrows indicate the region in which in which the batteries can complement the fuel cell stack and the hybrid system can therefore properly work. As the batteries are being discharged, their voltage drop. When the battery voltage falls below a dotted line, the fuel cell stack corresponding to the dotted line will be put under stress since it will be forced to work under the nominal voltage of 0.6 V/cell.

For example, in the case of the upper dotted line 40, the voltage of the battery cell with a discharge rate of 5C would be reached at point 46 when they have only spent 2000 mAh of their total 5000 mAh (less than half their capacity). When the voltage of the 5C battery cell drops below the upper dotted line 40, it would be advisable to use the first middle plate corresponding to the 45-cell configuration. From that point, the 5C battery cell would be effectively connected to a 45-cell fuel cell stack. Similarly, when the voltage of the 5C battery cell drops below the middle dotted line 42 (at point 48), it would be advisable to use the second middle plate corresponding to the 40-cell configuration.

Therefore, regions above each dotted line in Figure 10 correspond to regions of battery voltage in which hybridization of the two power sources can be made without stressing the fuel cell stack.

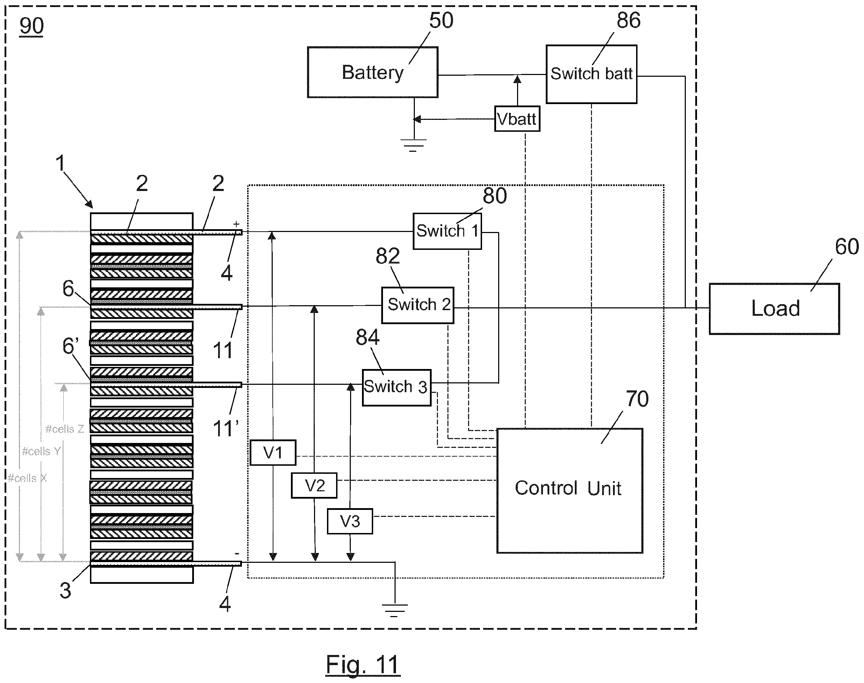

In the fuel cell stack 1 of the present disclosure, switching to a middle plate voltage will result in an intermediate voltage. The switching process to a determined conductive middle plate (6, 6') is performed by a control unit 70, as shown in the exemplary embodiment of **Figure 11.** The control unit 70 manages the hybridization between a battery 50 and a fuel cell stack 1 equipped with two middle plates (6, 6'). The battery 50 must be understood as an electric energy source comprising one or more electrochemical cells (battery 50 may be formed by an association of batteries connected in series and/or parallel). The hybrid power system 90, formed by the battery 50 the fuel cell stack 1 and the control unit, feeds a load 60.

The positive pole of the fuel cell stack 1 (i.e. the first conductive end plate 2) is connected directly to the load 60 but controlled by a first switch 80 that can be opened or closed through the control unit 70. The negative pole of the fuel cell stack 1 (i.e. the second conductive end plate 3) is connected to ground. Each middle plate (6, 6') is also directly connected to the load 60 through a middle plate switch (in the example of Figure 11, first middle plate switch 82 and second middle plate switch 84), which in turn is also operated by the control unit 70.

Therefore, the power output of the fuel cell stack 1 has at least two control switches, a first switch 80 for selecting the entire fuel cell stack and at least one middle plate switch (82, 84) for selecting a reduced fuel cell stack formed by one or more sub-stacks 5. On the other hand, the battery 50 is connected to the load 60 and to the output of the fuel cell stack 1 through a battery switch 86 also operated by the control unit 70.

The control unit 70 receives readings of the voltage of the battery (Vbatt), the voltage of the entire fuel cell stack (V1) and the voltages of the substacks (V2, V3). Depending on the values of these voltages, the control unit 70 will activate one or another switch to allow power flow to the load 60 from:

- The entire fuel cell stack, by activating only the first switch 80.
- The battery 50, by activating only the battery switch 86.
- A reduced fuel cell stack corresponding to the voltage of a middle plate (6, 6'), by activating the switch associated to said middle plate (6, 6'). This way, the first middle plate switch 82 would be activated to select the voltage of the first middle plate 6. Likewise, the second middle plate switch 84 would be activated to select the voltage of the second middle plate 6'.
- The battery 50 and the fuel cell stack 1, by activating the battery switch 86 along with a switch of the fuel cell stack (either the first switch 80 or any middle plate switch (82, 84)).

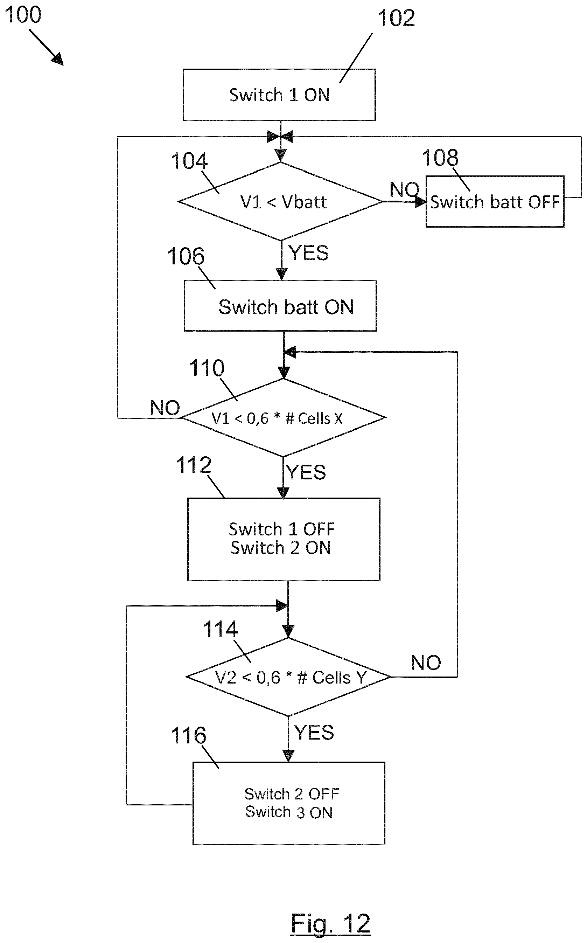

**Figure 12** depicts an embodiment of a switching process control 100 for the hybrid power system 90 of Figure 11. The switching process control 100 starts with the activation of the first switch 80 (switch 1), to feed the load 60 with only the power output by the entire fuel cell stack 1. Then, the unit control 70 checks 104 if the voltage of the entire fuel cell stack (V1) is lower than the voltage of the battery (Vbatt). In that case, the control unit 70 activates 106 the battery switch 86 to complement the fuel cell stack 1 with the power provided by the battery 50. On the contrary, if the voltage of the entire fuel cell stack (V1) is higher than the voltage of the battery (Vbatt), the entire fuel cell stack continues to feed the load 60 alone (first switch 80 remains closed 102, battery switch 86 remains opened 108).

After activating 106 the battery switch 86, the control unit 70 checks 110 if the voltage of the entire fuel cell stack (V1) is lower than a safe lower limit. In an embodiment, the safe lower limit corresponds to a cell limit voltage (e.g. 0.6 V) multiplied by the number of cells X of the entire fuel cell stack 1 (50 cells in the example of Figure 9B and Figure 10), to check if the voltage of each fuel cell drops below the cell limit voltage of 0.6 V. If the voltage is in fact smaller, in step 112 the effective size of the fuel cell stack is reduced by opening the first switch 80 (switch 1) and closing the first middle plate switch 82 (switch 2), which is connected to the first middle plate 6. However, if the entire fuel cell stack 1 has not yet reached the threshold of 0.6 V per cell, the control unit 70 goes back to step 104 to check if the battery is needed, as there may have been a reduction on the battery voltage (Vbatt) that would make the additional power from the battery unnecessary.

The basic process for one single middle plate 6 ends at step 112, running iteratively to check in the first instance if the battery 50 is required and, in subsequent steps, if switching to another middle plate 6' is needed, depending on the battery voltage (Vbatt) and the voltage of the effective fuel cell stack. The effective fuel cell stack is formed by the fuel cells stacked between the second end plate 3 and the active middle plate (i.e. the middle plate which associated switch has been activated). Therefore, in the example of Figure 12, after the first middle plate switch 82 has been activated in step 112, the control unit 70 checks 114 if the voltage of the reduced fuel cell stack (voltage V2 corresponding to the first middle plate) is lower than a safe lower limit for the reduced stack (a cell limit voltage of 0.6 V multiplied by the number of cells Y of the reduced fuel cell stack formed by 45 cells in the example of Figure 9B and Figure 10). In that case, in step 116 the effective size of the fuel cell stack is reduced again by activating the second middle plate switch 86 (switch 3), which is connected to the second middle plate 6', and opening the first middle plate switch 82. However, if the effective fuel cell stack has not yet reached the threshold of 0.6 V per cell, the control unit 70 goes back to step 110 to check if it is possible to return to the first middle plate 6 (i.e. an effective fuel cell stack with more cells).

In case there are more middle plates, after connecting a middle plate to the load 60, the control unit 70 checks if the voltage corresponding to the active middle plate is lower than a threshold (e.g. 0.6 V per cell), and in that case connecting the following middle plate to the load 60.

To summarize, in the switching process control the control unit 70 first checks if it is necessary to complement the entire fuel cell stack 1 with the battery 50 and, if so, the control unit 70 keeps checking if it is necessary to select a subsequent middle plate such that the voltage of the reduced fuel cell stack is greater than 0.6 volts per cell. Each time the cell voltage of the effective fuel cell stack is proved to be higher than 0.6 V/cell, the algorithm advances in the reverse direction to check if it is possible to return to an upper stack (i.e. an effective fuel cell stack with more cells), and even if it viable to disconnect 108 the battery 50.

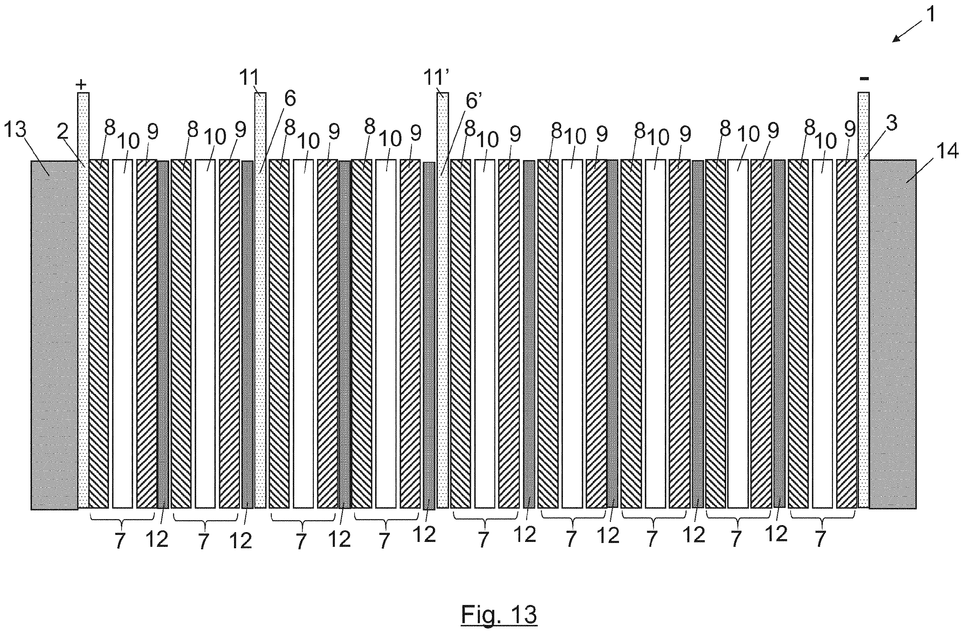

**Figure 13** depicts another embodiment of the fuel cell stack 1 with several conductive middle plates (6, 6') with one or more contact terminals (11, 11'). Unlike the examples shown in Figure 7 and 8, in this particular case the fuel cell stack 1 is not formed by a succession of the sub-cell stacks 5 of Figure 6. Instead, the fuel cell stack 1 comprises a plurality of individual fuel cells 7 connected in series and a bipolar plate 12 arranged in between consecutive fuel cells 7.

In the embodiment of Figure 13 the conductive middle plates (6, 6') are arranged between adjacent fuel cells 7, and more specifically, between the bipolar plate 12 in contact with a fuel cell 7 and the cathode 8 of an adjacent fuel cell 7. Similarly, the conductive middle plates (6, 6') may be arranged between the bipolar plate 12 in contact with a fuel cell 7 and the anode 9 of an adjacent fuel cell 7.

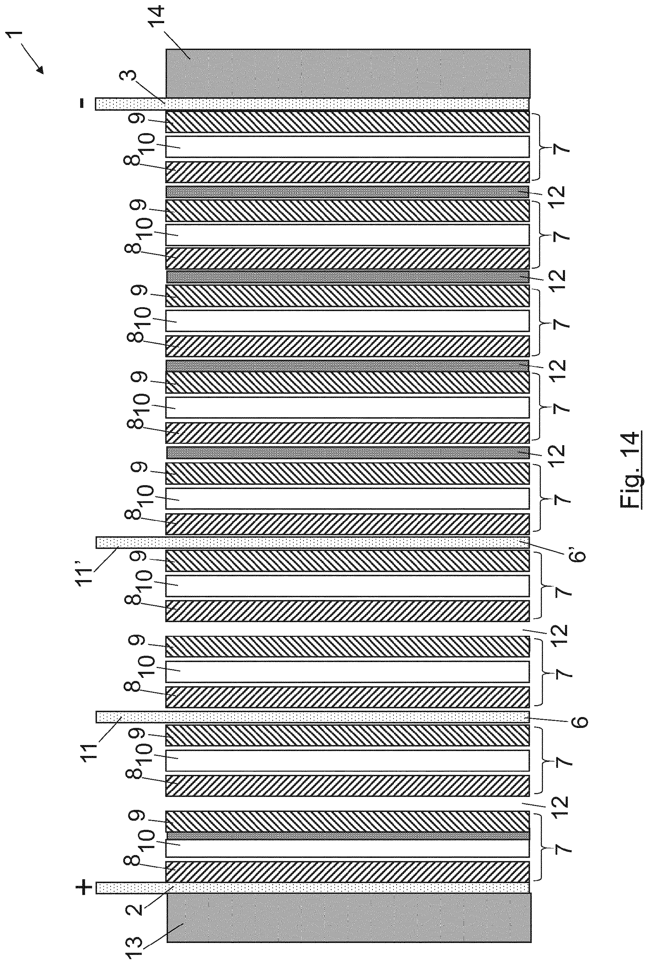

In another embodiment, as the one illustrated in **Figure 14,** the conductive middle plate (6, 6') may replace a bipolar plate 12, such that the conductive middle plate (6, 6') provides the function of a bipolar plate 12 and also provides a contact terminal (11, 11') through which a control unit 70 may select a different voltage of the fuel cell stack 1. In this particular embodiment the conductive middle plate (6, 6') is stacked in contact with the cathode (8) of a fuel cell (7) and with the anode (9) of an adjacent fuel cell (7). Alternatively, the conductive middle plate (6, 6') may be formed by a bipolar plate 12 incorporating least one contact terminal (e.g. one or more conductive tabs 11, flaps or solder lugs) extending or protruding from the bipolar plate 12, allowing to set up a wire connection (for instance, through welding).

**Claims**

1. A hybrid power system to feed a load (60), the hybrid power system (90) comprising a battery (50), a fuel cell stack (1) and a control unit (70), the fuel cell stack (1) comprising:

   first (2) and second (3) conductive end plates with contact terminals (4), and
   a plurality of fuel cells (7) electrically connected in series and stacked between the conductive end plates (2, 3);

   **characterized in that** the fuel cell stack (1) further comprises at least one conductive middle plate (6, 6') with at least one contact terminal (11, 11'), each conductive middle plate (6, 6') being stacked between adjacent fuel cells (7);
wherein the control unit (70) is configured to:

   select an operating voltage of the fuel cell stack (1) obtained from the contact terminals (4, 11, 11') of the at least one conductive middle plate (6, 6') and conductive end plates (2, 3) when the hybrid power system (90) is feeding the load (60), wherein the control unit (70) is configured to select the operating voltage of the fuel cell stack (1) depending on the values of the voltages (V1, V2, V3) at the contact terminals (4, 11, 11') of the fuel cell stack (1);
   compare (110, 114) the selected operating voltage of the fuel cell stack (1) feeding the load (60) with a safe lower limit;
   if the current operating voltage is inferior to the safe lower limit, select (112, 116) a lower operating voltage, obtained from the contact terminals (4, 11, 11') of the at least one conductive middle plate (6, 6') and conductive end plates (2, 3), to feed the load (60).

2. The hybrid power system of claim 1, wherein the safe lower limit is a value proportional to the number of active fuel cells feeding the load (60).

3. The hybrid power system of any preceding claim, further comprising a plurality of switches (82, 84, 86) connecting the load (60) with the contact terminals (11, 11') of the conductive middle plate (6, 6') and at least one contact terminal (4) of the conductive end plates (2, 3) of the fuel cell stack (1), wherein the control unit (70) is configured to operate the switches (82, 84, 86) to select the operating voltage of the fuel cell stack (1) used to feed the load (60).

4. The hybrid power system of any preceding claim, further comprising a battery switch (86) connecting the load (60) with the battery (50), wherein the control unit (70) is configured to operate the battery switch (86) depending on the values of the voltage (Vbatt) of the battery (50) and the operating voltage of the fuel cell stack (1).

5. The hybrid power system of any of claims 1 to 4, wherein the fuel cell stack (1) comprises a plurality of fuel cell sub-stacks (5) connected in series, each fuel cell sub-stack (5) comprising at least one fuel cell (7), and wherein each conductive middle plate (6, 6') is configured to be stacked between a pair of adjacent fuel cell sub-stacks (5).

6. The hybrid power system of claim 5, wherein each fuel cell sub-stack (5) of the fuel cell stack (1) comprises a plurality of bipolar plates (12, 12') and at least one fuel cell (7), each fuel cell (7) being stacked between a pair of bipolar plates (12, 12').

**7.** The hybrid power system of any of claims 1 to 4, wherein the fuel cell stack (1) further comprises a plurality of bipolar plates (12), each bipolar plate (12) being arranged between adjacent fuel cells (7), wherein each conductive middle plate (6, 6') is configured to be stacked in contact with a bipolar plate (12) and the cathode (8) or anode (9) of a fuel cell (7).

**8.** The hybrid power system of any of claims 1 to 4, wherein the fuel cell stack (1) further comprises a plurality of bipolar plates (12), each bipolar plate (12) being arranged between adjacent fuel cells (7), wherein each conductive middle plate (6, 6') is configured to be stacked in contact with the cathode (8) of a fuel cell (7) and the anode (9) of an adjacent fuel cell (7).

**9.** The hybrid power system of any preceding claim, wherein each contact terminal (11, 11') of the conductive middle plate (6, 6') of the fuel cell stack (1) comprises one or more conductive tabs protruding from the fuel cell stack (1).

**10.** The hybrid power system of claim 9, wherein the conductive middle plate (6, 6') of the fuel cell stack (1) comprises a bipolar plate (12) and one or more conductive tabs (11, 11') protruding from the bipolar plate (12).

**11.** The hybrid power system of any preceding claim, wherein the fuel cell stack (1) further comprises an end plate (13, 14) placed at each end of the fuel cell stack (1).

**12.** A method to control a hybrid power system comprising a battery (50) and a fuel cell stack (1) according to any of claims 1 to 11 ;
characterized in that the method comprises:

selecting an operating voltage of the fuel cell stack (1)), obtained from contact terminals (4, 11, 11') of the conductive end plates (2, 3) and at least one conductive middle plate (6, 6') stacked between adjacent fuel cells (7) when the hybrid power system (90) is feeding a load (60), wherein the operating voltage of the fuel cell stack (1) is selected depending on the values of the voltages (V1, V2, V3) at the contact terminals (4, 11, 11') of the fuel cell stack (1);
comparing (110, 114) the selected operating voltage of the fuel cell stack (1) feeding the load (60) with a safe lower limit;
if the current operating voltage is inferior to the safe lower limit, selecting (112, 116) a lower operating voltage, obtained from the contact terminals (4, 11, 11') of the at least one conductive middle plate (6, 6') and conductive end plates (2, 3), to feed the load (60).

**13.** The method of claim 12, wherein the safe lower limit is a value proportional to the number of active fuel cells feeding the load (60).

**14.** The method of claim 12 or 13, comprising:

comparing (104) the voltage of the entire fuel cell stack (V1) with the voltage of the battery (Vbatt);
if the voltage of the entire fuel cell stack (V1) is lower than the voltage of the battery (Vbatt), activating (106) a battery switch (86) to feed the load (60) with energy provided by the battery (50).

**Patentansprüche**

**1.** Hybridantriebssystem zur Versorgung einer Last (60), wobei das Hybridantriebssystem (90) eine Batterie (50), einen Brennstoffzellenstapel (1) und eine Steuereinheit (70) aufweist, wobei der Brennstoffzellenstapel (1) aufweist:

eine erste (2) und zweite (3) leitende Endplatten mit Kontaktanschlüssen (4) und eine Vielzahl von Brennstoffzellen (7), die elektrisch in Reihe geschaltet und zwischen den leitenden Endplatten (2, 3) gestapelt sind;
dadurch gekennzeichnet, dass der Brennstoffzellenstapel (1) ferner mindestens eine leitende Mittelplatte (6, 6') mit mindestens einem Kontaktanschluss (11, 11') aufweist, wobei jede leitende Mittelplatte (6, 6') zwischen benachbarte Brennstoffzellen (7) gestapelt ist; wobei die Steuereinheit (70) dazu eingerichtet ist, eine Betriebsspannung des Brennstoffzellenstapels (1) auszuwählen, die von den Kontaktanschlüssen (4, 11, 11') der mindestens einen leitenden Mittelplatte (6, 6') und der leitenden Endplatte (2, 3) erhalten wird, wenn die Hybridantriebssystem (90) die Last (60) versorgt, wobei die Steuereinheit (70) dazu eingerichtet ist, die Betriebsspannung des Brennstoffzellenstapels (1) in Abhängigkeit von den Werten der Spannungen (V1, V2, V3) an den Kontaktanschlüssen (4, 11, 11') des Brennstoffzellenstapels (1) auszuwählen;
die ausgewählte Betriebsspannung des Brennstoffzellenstapels (1), der die Last (60) versorgt, mit einer sicheren unteren Grenze zu vergleichen (110, 114);
Wenn die aktuelle Betriebsspannung unter der sicheren Untergrenze liegt, wird zur Versorgung der Last (60) eine niedrigere Betriebsspannung gewählt (112, 116), die von den Kontaktanschlüssen (4, 11, 11') der mindestens einen leitenden Mittelplatte (6, 6') und der leitenden Endplatten erhalten wird.

2. Hybridantriebssystem nach Anspruch 1, wobei die sichere Untergrenze ein Wert ist, der proportional zur Anzahl der aktiven Brennstoffzellen ist, die die Last (60) versorgen.

3. Hybridantriebssystem nach einem der vorhergehenden Ansprüche, das ferner eine Mehrzahl von Schaltern aufweist (82, 84, 86), die die Last (60) mit den Kontaktanschlüssen (11, 11') der leitenden Mittelplatte (6, 6') und mindestens einen Kontaktanschluss (4) der leitenden Endplatten (2, 3) des Brennstoffzellenstapels (1) verbinden, wobei die Steuereinheit (70) dazu eingerichtet ist, die Schalter (82, 84, 86) zu betätigen, um die Betriebsspannung des Brennstoffzellenstapels (1) auszuwählen, der zur Versorgung der Last verwendet wird (60).

4. Hybridantriebssystem nach einem der vorhergehenden Ansprüche, ferner umfassend einen Batterieschalter (86), der die Last (60) mit der Batterie (50) verbindet, wobei die Steuereinheit (70) dazu eingerichtet ist, den Batterieschalter (86) in Abhängigkeit von den Werten der Spannung (Vbatt) der Batterie (50) und der Betriebsspannung des Brennstoffzellenstapels (1) zu betreiben.

5. Hybridantriebssystem nach einem der Ansprüche 1 bis 4, wobei der Brennstoffzellenstapel (1) mehrere in Reihe geschaltete Brennstoffzellen-Teilstapel (5) aufweist, wobei jeder Brennstoffzellen-Teilstapel (5) mindestens eine Brennstoffzelle (7) aufweist und wobei jede leitende Mittelplatte (6, 6') dazu eingerichtet ist, zwischen einem Paar benachbarter Brennstoffzellen-Teilstapel (5) gestapelt zu werden.

6. Hybridantriebssystem nach Anspruch 5, wobei jeder Brennstoffzellen-Teilstapel (5) des Brennstoffzellenstapels (1) eine Mehrzahl von Bipolarplatten (12, 12') und mindestens eine Brennstoffzelle (7) aufweist, wobei jede Brennstoffzelle (7) zwischen einem vom Paar Bipolarplatten (12, 12') gestapelt ist.

7. Hybridantriebssystem nach einem der Ansprüche 1 bis 4, wobei der Brennstoffzellenstapel (1) ferner eine Mehrzahl von Bipolarplatten (12) aufweist, wobei jede Bipolarplatte (12) zwischen benachbarten Brennstoffzellen (7) angeordnet ist, wobei jede leitende Mittelplatte (6, 6') dazu eingerichtet ist, in Kontakt mit einer Bipolarplatte (12) und der Kathode (8) oder Anode (9) einer Brennstoffzelle (7) gestapelt zu werden.

8. Hybridantriebssystem nach einem der Ansprüche 1 bis 4, wobei der Brennstoffzellenstapel (1) ferner eine Mehrzahl von Bipolarplatten (12) aufweist, wobei jede Bipolarplatte (12) zwischen benachbarten Brennstoffzellen (7) angeordnet ist, wobei jede leitende Mittelplatte (6, 6') dazu eingerichtet ist, in Kontakt mit der Kathode (8) einer Brennstoffzelle (7) und der Anode (9) einer benachbarten Brennstoffzelle (7) gestapelt zu werden.

9. Hybridantriebssystem nach einem der vorhergehenden Ansprüche, wobei jeder Kontaktanschluss (11, 11') der leitenden Mittelplatte (6, 6') des Brennstoffzellenstapels (1) einen oder mehrere Kontaktanschlüssen aufweist, die aus dem Brennstoffzellenstapel (1) herausragen.

10. Hybridantriebssystem nach Anspruch 9, wobei die leitende Mittelplatte (6, 6') des Brennstoffzellenstapels (1) eine Bipolarplatte (12) und eine oder mehrere Kontaktanschlüssen (11, 11') aufweist, die aus der Bipolarplatte (12) herausragen.

11. Hybridantriebssystem nach einem der vorhergehenden Ansprüche, wobei der Brennstoffzellenstapel (1) ferner eine Endplatte (13, 14) aufweist, die an jedem Ende des Brennstoffzellenstapels (1) angeordnet ist.

12. Verfahren zum Steuern eines Hybridantriebssystems mit einer Batterie (50) und einem Brennstoffzellenstapel (1) nach einem der Ansprüche 1 bis 11; **dadurch gekennzeichnet, dass** das Verfahren aufweist:

eine Betriebsspannung des Brennstoffzellenstapels (1) auszuwählen, die von Kontaktanschlüssen (4, 11, 11') der leitenden Endplatten (2, 3) und mindestens einer leitenden Mittelplatte (6, 6') erhalten wird, die zwischen benachbarten Brennstoffzellen (7) gestapelt sind, wenn das Hybridantriebssystem eine Last (1) versorgt, wobei die Betriebsspannung des Brennstoffzellenstapels (1) in Abhängigkeit von den Werten der Spannungen (V1, V2, V3) an den Kontaktanschlüssen (4, 11, 11') des Brennstoffzellenstapels (1) gewählt wird;
die ausgewählte Betriebsspannung des Brennstoffzellenstapels (1), der die Last versorgt (60), mit einer sicheren unteren Grenze zu vergleichen (110, 114); wenn die aktuelle Betriebsspannung unter der sicheren Untergrenze liegt, wird zur Versorgung der Last (60) eine niedrigere Betriebsspannung gewählt (112, 116), die von den Kontaktanschlüssen (4, 11, 11') der mindestens einen leitenden Mittelplatte (6, 6') und der leitenden Endplatten erhalten wird.

13. Verfahren nach Anspruch 12, wobei die sichere Untergrenze ein Wert ist, der proportional zu der Anzahl von aktiven Brennstoffzellen ist, die die Last (60) versorgen.

**14.** Verfahren nach Anspruch 12 oder 13, wobei das Verfahren aufweist:

die Spannung des gesamten Brennstoffzellenstapels (V1) mit der Spannung der Batterie (Vbatt) zu vergleichen (104); wenn die Spannung des gesamten Brennstoffzellenstapels (V1) niedriger als die Spannung der Batterie (Vbatt) ist, wird ein Batterieschalter (86) aktiviert (106), um die Last (60) mit der von der Batterie (50) bereitgestellten Energie zu versorgen.

## Revendications

**1.** Un système d'alimentation hybride pour alimenter une charge (60), le système d'alimentation hybride (90) comprenant une batterie (50), un empilement de piles à combustible (1) et une unité de commande (70), l'empilement de piles à combustible (1) comprenant :

Une première (2) et une deuxième (3) plaques d'extrémité conductrices avec des bornes de contact (4), et une pluralité de piles à combustible (7) connectées électriquement en série et empilées entre les plaques d'extrémité conductrices (2, 3) ;
**caractérisé en ce que** l'empilement de piles à combustible (1) comprend en outre au moins une plaque centrale conductrice (6, 6') avec au moins une borne de contact (11, 11'), chaque plaque centrale conductrice (6, 6') étant empilée entre piles à combustible adjacentes (7); dans lequel l'unité de commande (70) est configurée pour :

sélectionner une tension de fonctionnement de l'empilement de piles à combustible (1) obtenue à partir des bornes de contact (4, 11, 11') d'au moins une plaque centrale conductrice (6, 6') et de plaques d'extrémité conductrices (2, 3) lorsque le système d'alimentation hybride (90) alimente la charge (60), l'unité de commande (70) étant configurée pour sélectionner la tension de fonctionnement de l'empilement de piles à combustible (1) en fonction des valeurs des tensions (V1, V2, V3) au niveau des bornes de contact (4, 11, 11') de l'empilement de piles à combustible (1) ;
comparer (110, 114) la tension de fonctionnement sélectionnée de l'empilement de piles à combustible (1) alimentant la charge (60) avec une limite inférieure de sécurité; si la tension de fonctionnement actuelle est inférieure à la limite inférieure de sécurité, sélectionner (112, 116) une tension de fonctionnement inférieure, obtenue à partir des bornes de contact (4, 11, 11') d'au moins une plaque centrale conductrice (6, 6') et des plaques d'extrémité conductrices (2, 3) pour alimenter la charge (60).

**2.** Un système d'alimentation hybride selon la revendication 1, dans lequel la limite inférieure de sécurité est une valeur proportionnelle au nombre de piles à combustible actives alimentant la charge (60).

**3.** Un système d'alimentation hybride selon l'une quelconque des revendications précédentes, comprenant en outre une pluralité de commutateurs (82, 84, 86) reliant la charge (60) aux bornes de contact (11, 11') de la plaque centrale conductrice (6, 6') et au moins une borne de contact (4) des plaques d'extrémité conductrices (2, 3) de l'empilement de piles à combustible (1), l'unité de commande (70) étant configurée pour actionner les interrupteurs (82, 84, 86) pour sélectionner la tension de fonctionnement de l'empilement de piles à combustible (1) utilisée pour alimenter la charge (60).

**4.** Un système d'alimentation hybride selon l'une quelconque des revendications précédentes, comprenant en outre un interrupteur de batterie (86) reliant la charge (60) à la batterie (50), l'unité de commande (70) étant configurée pour faire fonctionner l'interrupteur de batterie (86) en fonction des valeurs de la tension (Vbatt) de la batterie (50) et de la tension de fonctionnement de l'empilement de piles à combustible (1)

**5.** Un système d'alimentation hybride selon l'une quelconque des revendications 1 à 4, dans lequel l'empilement de piles à combustible (1) comprend une pluralité de sous-empilements de piles à combustible (5) connectés en série, chaque sous-empilement de piles à combustible (5) comprenant au moins une pile à combustible (7), et dans lequel chaque plaque centrale conductrice (6, 6') est configurée pour être empilée entre une paire de sous-empilements de piles à combustible adjacentes (5).

**6.** Un système d'alimentation hybride selon la revendication 5, dans lequel chaque sous-empilement de piles à combustible (5) de l'empilement de piles à combustible (1) comprend une pluralité de plaques bipolaires (12, 12') et au moins une pile à combustible (7), chaque pile à combustible (7) étant empilée entre une paire de plaques bipolaires (12, 12').

**7.** Un système d'alimentation hybride selon l'une quelconque des revendications 1 à 4, dans lequel l'empilement de piles à combustible (1) comprend en outre une pluralité de plaques bipolaires (12), chaque plaque bipolaire (12) étant agencée entre des piles à combustible adjacentes (7), dans laquelle chaque plaque centrale conductrice (6, 6') est configurée pour être empilée au contact d'une plaque bipolaire (12) et de la cathode (8) ou de l'anode (9) d'une pile à combustible (7).

8. Un système d'alimentation hybride selon l'une quelconque des revendications 1 à 4, dans lequel l'empilement de piles à combustible (1) comprend en outre une pluralité de plaques bipolaires (12), chaque plaque bipolaire (12) étant agencée entre des piles à combustible adjacentes (7), dans lesquelles chaque plaque centrale conductrice (6, 6') est configurée pour être empilée au contact de la cathode (8) d'une pile à combustible (7) et de l'anode (9) d'une pile à combustible adjacente (7).

9. Un système d'alimentation hybride selon l'une quelconque des revendications précédentes, dans lequel chaque borne de contact (11, 11') de la plaque centrale conductrice (6, 6') de la pile à combustible (1) comprend une ou plusieurs languettes conductrices faisant saillie de l'empilement de piles à combustible (1).

10. Un système d'alimentation hybride selon la revendication 9, dans lequel la plaque centrale conductrice (6, 6') de l'empilement de piles à combustible (1) comprend une plaque bipolaire (12) et une ou plusieurs bornes de contact (11, 11') faisant saillie de la plaque bipolaire (12) .

11. Un système d'alimentation hybride selon l'une quelconque des revendications précédentes, dans lequel l'empilement de piles à combustible (1) comprend en outre une plaque d'extrémité (13, 14) placée à chaque extrémité de l'empilement de piles à combustible (1).

12. Un procédé de contrôle d'un système d'alimentation hybride comprenant une batterie (50) et un empilement de piles à combustible (1) selon l'une quelconque des revendications 1 à 11; **caractérisé en ce que** le procédé comprend:

La sélection d'une tension de fonctionnement de l'empilement de piles à combustible (1), obtenue à partir des bornes de contact (4, 11, 11') des plaques d'extrémité conductrices (2, 3) et d'au moins une plaque centrale conductrice (6, 6') empilées entre des piles à combustible adjacentes (7) lorsque le système d'alimentation hybride (90) alimente une charge (60), la tension de fonctionnement de l'empilement de piles à combustible (1) étant sélectionnée en fonction des valeurs des tensions (V1, V2, V3) aux bornes de contact (4, 11, 11') de l'empilement de piles à combustible (1) ;
comparer (110, 114) la tension de fonctionnement sélectionnée de l'empilement de piles à combustible (1) alimentant la charge (60) avec une limite inférieure de sécurité; si la tension de fonctionnement actuelle est inférieure à la limite inférieure de sécurité, sélectionner (112, 116) une tension de fonctionnement inférieure, obtenue à partir des bornes de contact (4, 11, 11') d'au moins une plaque centrale conductrice (6, 6') et des plaques d'extrémité conductrices (2, 3) pour alimenter la charge (60) .

13. Un procédé selon la revendication 12, dans lequel la limite inférieure de sécurité est une valeur proportionnelle au nombre de piles à combustible actives alimentant la charge (60) .

14. Un procédé selon la revendication 12 ou 13, comprenant :

comparer (104) la tension de l'empilement de piles à combustible complet (V1) avec la tension de la batterie (Vbatt);
si la tension de l'empilement de piles à combustible complet (V1) est inférieure à la tension de la batterie (Vbatt), activer (106) un interrupteur de batterie (86) pour alimenter la charge (60) avec l'énergie fournie par la batterie (50).

Fig. 1 (Prior Art)

Fig. 2 (Prior Art)

Fig. 3 (Prior Art)

Fig. 4 (Prior Art)

Fig. 5

Fig. 6

Fig. 7

Fig. 8

Fig. 9A

EP 3 340 355 B1

Fig. 9B

EP 3 340 355 B1

Fig. 11

Fig. 12

Fig. 13

EP 3 340 355 B1

Fig. 14

**EP 3 340 355 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6555928 B1

- US 2009181269 A1